# EUROPEAN PATENT SPECIFICATION

(11) **EP 4 181 330 B1**
(45) Date of publication and mention of the grant of the patent: **08.10.2025**
(21) Application number: 21207760.6
(22) Date of filing: 11.11.2021
(51) Int. Cl.: H01R 43/00, H01R 13/52, F42B 3/00, B29C 45/00

(54) **A METHOD OF PRODUCING A SEALED CONNECTOR ARRANGEMENT, A SEALED CONNECTOR ARRANGEMENT AND USE OF THE METHOD**
VERFAHREN ZUR HERSTELLUNG EINER ABGEDICHTETEN VERBINDERANORDNUNG, ABGEDICHTETE VERBINDERANORDNUNG UND VERWENDUNG DES VERFAHRENS
PROCÉDÉ DE PRODUCTION D'UN AGENCEMENT DE CONNECTEUR ÉTANCHE, AGENCEMENT DE CONNECTEUR ÉTANCHE ET UTILISATION DU PROCÉDÉ

(43) Date of publication of application: 17.05.2023
(73) Proprietor: Autoliv Development AB, 447 83 Vårgårda (SE)
(72) Inventor: ANDERSSON, Mikael, 447 83 Vårgårda (SE); ÖSTMAN, Martin, 447 83 Vårgårda (SE); WANNEROS, Fredrik, 447 83 Vårgårda (SE); WERGELAND, Clas, 447 83 Vårgårda (SE)
(74) Representative: AWA Sweden AB

(56) References cited:
- US-A- 5 278 357
- US-A1- 2010 055 953

## Description

### Technical field

The present invention refers to a method of producing a sealed connector arrangement, a sealed connector arrangement and the use of a sealed connector arrangement in a road vehicle or in a wearable electronic device.

### Technical background

It is well known in the art to use sealed connectors in equipment that get washed or that is subjected to a dusty or humid environment in order of providing a protection against ingress of humidity and dust. One well known measure to provide sealed connectors is to fill the interior of the connector housing with a sealing material that effectively seals off the interfaces between the housing parts as such and also between the housing and the cable that extends into the housing. However, such sealing material does only seal off the connector as such and not the interface between two mating connectors or between the connector and the electronic component to which the connector is configured to be connected. This is typically made by arranging one or more flexible sealings in and around such interface. This is however complicated since it is made during assembly and it is very costly, no matter if it is made manually or in an automated manner. Also, the lifetime is limited due to aging of the material used in the flexible sealings. Further, in the event of any repair of the electronic device or its components, it is very difficult to maintain the protection. There is hence a need for an improved method of producing a sealed connector arrangement and also a need for the provision of an improved sealed connector arrangement as such.

US 2010/00559553A1 discloses a connector assembly having a plurality of discrete components where an adhesive is disposed in an internal chamber to secure a boot body and a contact housing together.

### Summary

It is an object of the present invention to provide an improved method of producing a sealed connector arrangement and also an improved sealed connector arrangement as such.

Another object of the invention is to safeguard the provision of a sealed connector arrangement also for the aftermarket.

Yet another object is that the method and arrangement should be applicable not only for connectors of electrical type but also for connectors of optical type.

Still another object is that the method and arrangement should be applicable no matter type of terminals that may be used in the connector arrangement.

These and other objects that will be apparent from the following summary and description are achieved by a method of manufacturing a sealed connector arrangement and by a sealed connector arrangement as such as is defined by the appended claims.

According to an aspect of the present invention, there is provided a method of producing a sealed connector arrangement, by means of a first terminal aggregate and a connector,
the first terminal aggregate being adapted to form part of an electronic unit; and
the connector comprising:
   a housing supporting a second terminal aggregate adapted to form an electrical and/or optical contact with the first terminal aggregate;
   a cable connected to the second terminal aggregate and extending out of the housing through a cable opening; and
   a channel system comprising an inlet opening and a first outlet opening, said first outlet opening being arranged adjacent the second terminal aggregate;
the method comprising:
connecting the connector to the first terminal aggregate thereby forming the electrical and/or optical contact between the first and the second terminal aggregates; characterised by
injecting a first sealing material into the inlet opening so that the first sealing material is forced via the channel system to a vicinity of the first outlet opening, thereby sealing-off an interface between the first and the second terminal aggregates; and supplementary filling the first outlet opening with a second sealing material from an exterior side of the housing.

Accordingly, a method of producing a sealed connector arrangement is provided wherein the sealing is provided by injecting a sealing material into an internal channel system of the housing. The injection of sealing material is made in a condition when the connector is connected to the first terminal aggregate thereby forming the electrical and/or optical contact between the first and the second terminal aggregates. Accordingly, the channel system to be filled with a sealing material is defined partly by the connector and its housing and partly by the first terminal aggregate and hence also by the interface between the first terminal aggregate and the second terminal aggregate. Thereby, the connector with its housing which supports the second terminal aggregate and which in turn is connected to the first terminal aggregate will, after filling, form one sealed unit in which the area surrounding the interface between the interconnected first and second terminal aggregates is sealed-off and hence protected from intrusion of humidity and dust. Since the first and second terminal aggregates are interconnected before the sealing material is injected, the sealing-off does not impact the communication between the two terminal aggregates. Further, the sealing material prevents dis-connection of the two terminal aggregates.

Depending on the amount of sealing material that is injected, the sealing material may be forced all the way from the inlet opening of the channel system to and out of the outlet opening of the channel system, i.e. providing a complete filling. According to the invention, the sealing material is forced all the way from the inlet opening of the channel system to a vicinity of the first outlet opening but not out of the same. This may be seen as a partial filling. The filling should be made to such extent that the sealing material seals-off the interface between the first and the second terminal aggregates from the exterior without impacting the power/signal transmission therebetween. Thus, both degrees of filling may be used on the manufacturers choice to provide a sealed connector arrangement that is sufficiently sealed to meet a given standard or purpose. One advantage of a complete filling over a partial filling is that the complete filling better facilitates a visual quality inspection to see any pores or the like that may indicate or allow a possible intrusion of dust/humidity.

The inlet opening to the channel system will be automatically sealed-off since the sealing material is injected via the same. The degree of filling depends on parameters such viscosity and amount of sealing material injected.

Not only does the method provide a sealed connector arrangement, but it also provides a tamper-proof connector arrangement that facilitates the process when installing a component using such sealed connector arrangement in its intended position, e.g. in a road vehicle or in a wearable electronic device. Further, it facilitates the after-market in the event such sealed connector arrangement is provided as a spare part. This will by default be provided in a sealed condition without any separate needs to add additional sealings or gaskets.

The channel system may further comprise a second outlet opening being arranged adjacent the cable opening, wherein the act of injecting sealing material into the inlet opening further comprises forcing the sealing material via the channel system to a vicinity of, or out of the second outlet opening, thereby sealing-off an interface between the cable and the cable opening of the housing.

The cable is preferably arranged substantially coaxially with the cable opening of the housing. This means that the second outlet opening will have a substantially ring-shaped cross-sectional area. By sealing-off this interface, any dust or humidity is prevented from entering the connector arrangement via the cable opening. Since the sealing-off is made from the inside-out, an efficient sealing-off is provided for without the need for any additional/separate sealing members.

Also, the sealing material contributes to the fixation of the cable to the housing and does hence act as a cable lock which prevents the cable from being pulled out. The latter as such may be seen as an extra safety measure. Further, this kind of fixation of the cable further contributes to the provision of a tamper-proof unit on the after-market.

Further, the process when mounting a component using such sealed connector arrangement in its intended position is facilitated, no matter if it is during factory mounting or when handled as a spare part, simply since there is no need to mount additional sealings or gaskets.

The channel system may further comprise a third outlet opening being arranged adjacent a free end surface of the housing configured to face the first terminal aggregate in a condition when the connector is connected to the first terminal aggregate, wherein the act of injecting sealing material into the inlet opening further comprises forcing the sealing material via the channel system to a vicinity of, or out of the third outlet opening, thereby sealing-off an interface between the free end surface of the housing and the first terminal aggregate.

The interface between the free end surface of the housing and the first terminal aggregate may be seen as a gap which typically has a substantially lateral extension whereas the engagement between the first and second terminal aggregates typically has a substantially axial extension. The gap may have a substantially 360 degrees circumferential extension. By sealing-off the third outlet opening from the inside-out, and at least a part of the interface between the free end surface of the housing and the first terminal aggregate, any dust or humidity is prevented from entering the connector arrangement via such interface and via the third outlet opening.

The skilled person realizes that the channel system must not be limited to one, two or three outlet openings, but that more than three outlet openings may be applied. No matter number of outlet openings, the cross-sectional areas of the one or more outlet opening(s) may differ depending on position and purpose.

The sealing material may be injected into the inlet opening by using a pressure in the range of 0-8 bar, more preferred in the range of 2-8 bar and even more preferred in the range of 3-6 bar. The pressure depends on parameters such as geometry and volume of the channel, any internal flow restrictions in the channel, type of sealing material, viscosity and any internal temperature differences in the parts making up the connector arrangement. It is advantageous if the pressure is sufficiently high to fill the channel and also force any air that otherwise may be entrapped in the channel to leave the same.

The method may further comprise the act of hardening the sealing material after injecting the sealing material into the inlet opening. The hardening may be made e.g. in room temperature or subjecting the filled connector arrangement to heat, i.e. to a temperature above room temperature. The choice of hardening method, temperature and time depends on parameters such as the type of sealing material that is used and allowed cycle time in the production system.

The sealing material may be a hot melt adhesive or a two-component adhesive. It is to be understood that also other types of adhesives or sealants may be used, either alone or in combination. The channel system is according to the invention partially filled with a first type of sealing material, e.g. a hot melt adhesive or a two-component adhesive, whereas any remaining space adjacent any of the one or more outlet openings is filled with a second type of sealing material. Such supplementary filling is made from the exterior side of the housing. Also, such second type of sealing material may be hardened by another method than used for the first type adhesive, such as UV heating.

The channel system of the housing may further comprise at least one vent hole, whereby air in the channel system is allowed to leave the channel system during the act of injecting the sealing material.

The position of the at least one vent hole and the number of vent holes depends on the overall design and complexity of the channel system. It is preferred that the at least one vent hole is arranged closer to any of the at least one outlet openings than to the inlet opening. Also, it is preferred that the at least one vent hole is smaller than any of the outlet openings.

According to another aspect, a sealed connector arrangement with the features according to claim 10 is provided. The sealed connector arrangement may by way of example be configured to be a part of a road vehicle or a wearable electronic device. The wearable electronic device, may, as a non-limiting example be a helmet, a backpack, a vest or a hip-protection.

The first terminal aggregate may be an electric device or a member of an electric device. As a non-restricting example, the electric device may be a micro gas generator to be used in an airbag-system or in a piston-based hood lifter of a rad vehicle.

The electrical device may be configured to form part of a road vehicle or a wearable electronic device.

The first terminal arrangement may be part of a micro gas generator.

The first and second terminal aggregates may comprise power connecting members. Alternatively, the first and second terminal aggregates may comprise optical connecting members. The terminal aggregates may, as non-limiting examples, be of a plug-and-socket type, a fixed contact surface configured to interact with a biased contact surface, a connector of the USB type or a fiber optics connector.

No matter type of terminal aggregate, the first terminal aggregate should be complementary to the second terminal aggregate. The skilled person realizes that at least one of the two terminal aggregates may be of a universal type with a plurality of ports but with only relevant ports being wired.

According to yet another aspect, the invention refers to the use of the method according to any of claims 1-7 to produce a sealed connector arrangement according to any of claims 10-14 in a road vehicle or in a wearable electronic device.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses a connector arrangement comprising an electronic unit with a first terminal aggregate and a connector with a second terminal aggregate to be connected thereto.
Fig. 2 discloses the connector arrangement with the first terminal aggregate connected to the connector.
Fig. 3 discloses a cross-section of the connector arrangement of Fig. 2 before sealing.
Fig. 4 discloses the filling of the connector arrangement of Fig. 2 with a sealing material to thereby form a sealed connector arrangement.
Fig. 5 discloses a first cross section of the sealed connector arrangement.
Fig. 6 discloses a second cross section of the sealed connector arrangement.
Fig. 7 discloses a first cross section of a second embodiment of a sealed connector arrangement.
Fig. 8 discloses a second cross section of the second embodiment of a sealed connector arrangement.
Fig. 9 is a flow-chart illustrating the different method steps.

### Detailed description

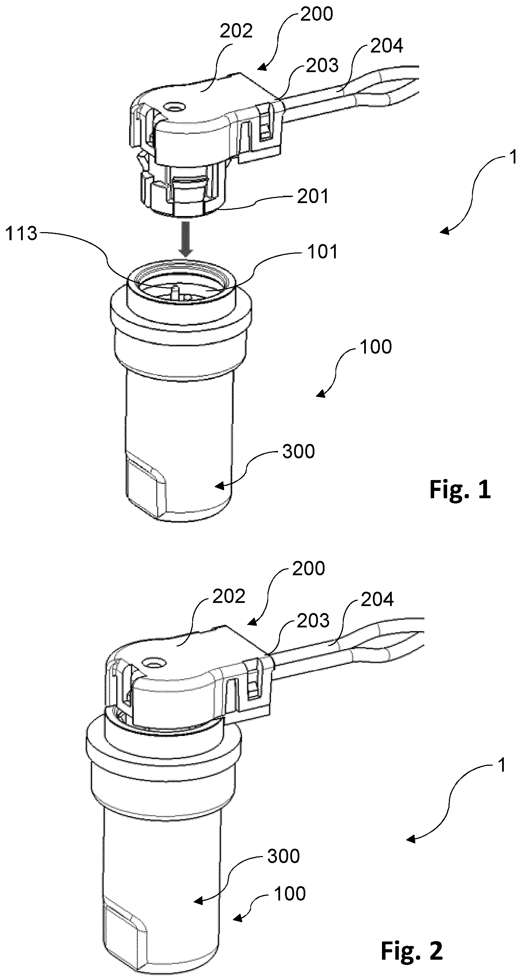

Now turning to Figs. 1-3, one embodiment of connector arrangement 1 is disclosed. The connector arrangement 1 comprises an electronic unit 100 supporting a first terminal aggregate 101 and a connector 200 with a housing 202 which supports a second terminal aggregate 201. The first and the second terminal aggregates 101, 201 are, in a condition when connected to each other, configured to form a contact with each other. The contact may, depending on the type of terminal aggregate be used to allow a power transmission or a signal transmission, such as an optical signal.

The connector 200 comprises the housing 202 that as such is well known in the art. The housing 202 provides an encapsulation of and supports a terminal aggregate. The terminal aggregate of the connector 200 is in the present application referred to as the second terminal aggregate 201. Further, the housing 202 comprises a cable opening 203 that is configured to receive a cable 204. The cable 204 extends into the housing 202 from an exterior side thereof and is connected to the second terminal aggregate 201 to allow powering thereof or to allow transmission of a signal via said second terminal aggregate 201. Again, this is well known in the art and is not further discussed. Equally well known is the interface between the cable 204 and the second terminal aggregate 201 which is also not disclosed. The housing 202 further comprises, also well known in the art, a shielding member 205, typically made of graphite. The skilled person realises that the housing may have numerous different designs with remained function, including the position of the cable opening 203.

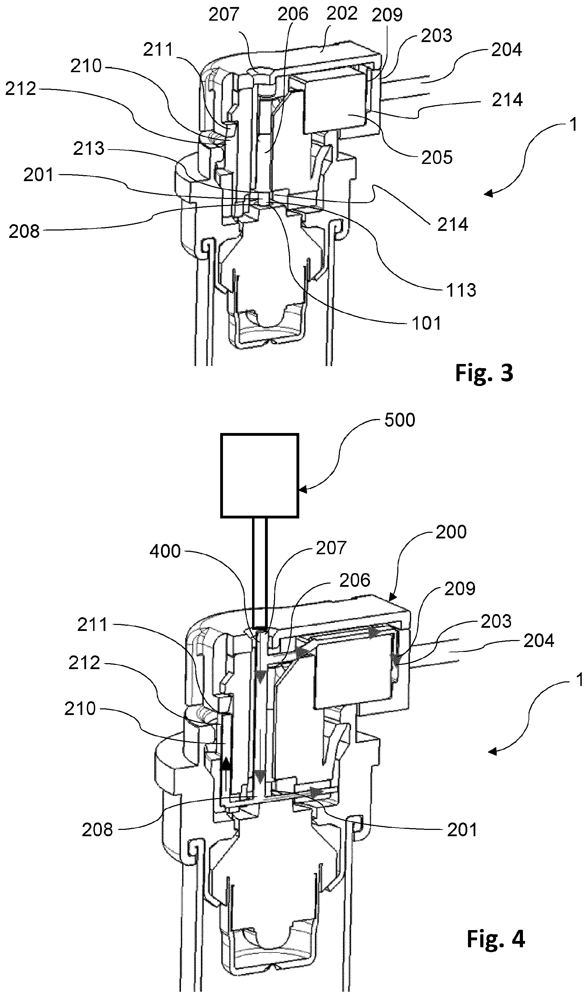

According to the present invention, the housing 202 is in its interior provided with a channel system 206. The channel system 206 comprises an inlet opening 207 and a first outlet opening 208. The first outlet opening 208 is arranged adjacent the second terminal aggregate 201. This is best seen in Fig. 3.

The disclosed channel system 206 comprises a second outlet opening 209 which is arranged adjacent the cable opening 203. The cable 204 is preferably arranged substantially coaxially with the cable opening 203. This means that the second outlet opening 209 will have a substantially ring-shaped cross-sectional area. As will be further discussed below, when injecting a sealing material into the inlet opening 207, the sealing material will propagate through the channel system 206, from the inlet opening 207 to a vicinity of, or out of the second outlet opening 209, thereby sealing-off an interface between the cable 204 and the cable opening 203 of the housing 202. By sealing-off this interface any dust or humidity is prevented from entering the connector arrangement 100 via the cable opening 203. Since the sealing-off is made from the inside-out, an efficient sealing-off is provided for without the need for any additional/separate sealing members. Also, the sealing material contributes to the fixation of the cable 204 to the housing 202. The sealing material hence additionally acts as a cable lock which prevents the cable 204 from being pulled out.

The disclosed channel system 206 further comprises a third outlet opening 210. The third outlet opening 210 is arranged adjacent a free end surface 211 of the housing 202. The free end surface 211 is configured to face the first terminal aggregate 101 in a condition when the connector 200 is connected to the first terminal aggregate 101. The interface between the free end surface 211 of the housing 202 and the first terminal aggregate 101 may be seen as a gap 212 which typically has a substantially lateral extension whereas the engagement between the first and second terminal aggregates 101, 201 typically has a substantially axial extension. In the context of the invention, "axial" refers to the direction in which the first and second terminal aggregates 101, 201 are moved towards each other to form a connection therebetween. The gap 212 may have a substantially 360 degrees circumferential extension. As will be further discussed below, when injecting a sealing material into the inlet opening 207, the sealing material will propagate through the channel system 206, from the inlet opening 207 to a vicinity of, or out of the third outlet opening 210, thereby sealing-off the third outlet opening 210 from the inside-out and also at least a part of the interface between the free end surface 211 of the housing 202 and the first terminal aggregate 101. Thereby, any dust or humidity is prevented from entering the connector arrangement 100 via such interface and via the third outlet opening 210.

The skilled person realizes that the channel system 206 must not be limited to one, two or three outlet openings, but that more than three outlet openings may be applied. No matter the number of outlet openings, the cross-sectional areas of the one or more outlet opening(s) may differ depending on position.

The channel system 206 does further preferably comprise at least one vent hole 214. The at least one vent hole 214 allows air that is entrapped in the channel system 206 to leave the system during injection of the sealing material as will be described below. The position of the at least one vent hole 214 and the number of vent holes 214 depends on the overall design and complexity of the channel system 206. It is preferred that the at least one vent hole 214 is arranged closer to any of the at least one outlet openings 208, 209, 210 than to the inlet opening 207. Also, it is preferred that the at least one vent hole 214 is smaller than any of the outlet openings 208, 209, 210.

Now turning to Figs 1 and 2 anew. The first terminal aggregate 101 is disclosed as being supported by and hence constituting a member of an electrical device 300. The electrical device 300 may by way of example be configured to constitute a component of a road vehicle or a wearable electronic device. As a non-restricting example, the electric device 300 may be a micro gas generator to be used in an airbag-system or in a piston-based hood lifter in a road vehicle. The first terminal aggregate 101 may accordingly be part of such micro gas generator, piston-based hood lifter or wearable electronic device. Correspondingly, the wearable electronic device, may, as a non-limiting example be a helmet, a backpack, a vest or a hip-protection.

The first and second terminal aggregates 101, 201 may comprise power connecting members 113, 213 or optical connecting members. The terminal aggregates 101, 201 may, no matter type, as non-limiting examples, be of a plug-and-socket type, a fixed contact surface configured to interact with a biased contact surface, a connector of the USB type or a fiber optics connector. Also, it goes without saying that the first terminal aggregate 101 may be of a male type and the second terminal aggregate 201 of a female type. Alternatively, the first terminal aggregate 101 may be of a female type and the second terminal aggregate 201 of a male type. No matter type of terminal aggregate, the first terminal aggregate 101 should be complementary to the second terminal aggregate 201. The skilled person realizes that at least one of the two terminal aggregates 101, 201 may be of a universal type with a plurality of ports but only with relevant ports being wired and hence intended to be used for the specific intended purpose.

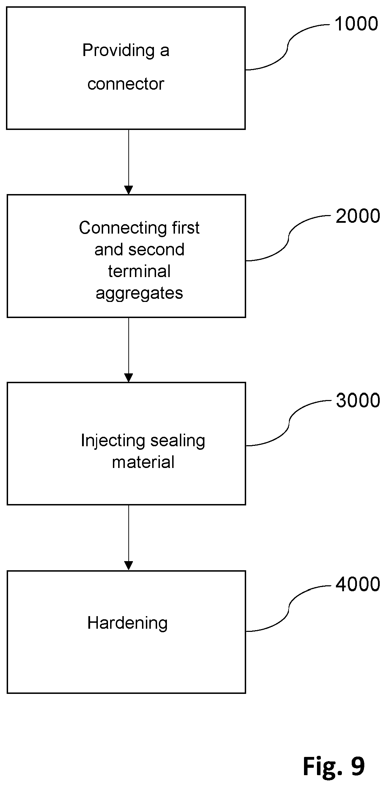

Now turning to Figs 4-6, a method of producing a sealed connector arrangement 1 of the type discussed above will be described. The individual method steps are given in the flow-chart of Fig. 9.

The method comprises the initial steps of providing 1000 a connector 200 and a first terminal aggregate 101 of the type discussed above, and connecting 2000 the second terminal aggregate 202 of the connector 200 to the first terminal aggregate 101 to thereby form a contact between the first and the second terminal aggregates 101, 201.

As a next step, a sealing material 400 is injected 3000 into the channel system 206 via the inlet opening 207. As is schematically disclosed in Fig. 4, the injection is made by a nozzle 500 that is moved into fluid communication with the inlet opening 207 of the channel system 206. The nozzle 500 is connected to a nondisclosed dispenser. The sealing material 400 is injected into the inlet opening 207 so that the sealing material 400 is forced via the channel system 206 to a vicinity of each and one of the outlet openings 208, 209, 210 of the channel system 206. The disclosed embodiment of the channels system 206 comprises a first outlet opening 208, a second outlet opening 209 and a third outlet opening 210, each of them discussed above with reference to Figs 1-3.

When injecting the sealing material 400 into the inlet opening 207, the sealing material 400 will be forced to fill the channel 206 and be forced to a vicinity of the first outlet opening 208, thereby sealing-off an interface between the first and the second terminal aggregates 101, 201. It will also be forced to a vicinity of, or out of the second outlet opening 209, thereby sealing-off an interface between the cable 204 and the cable opening 203 of the housing 202. Further, it will be forced to a vicinity of, or out of the third outlet opening 210, thereby sealing-off an interface between the free end surface 211 of the housing 202 and the first terminal aggregate 101.

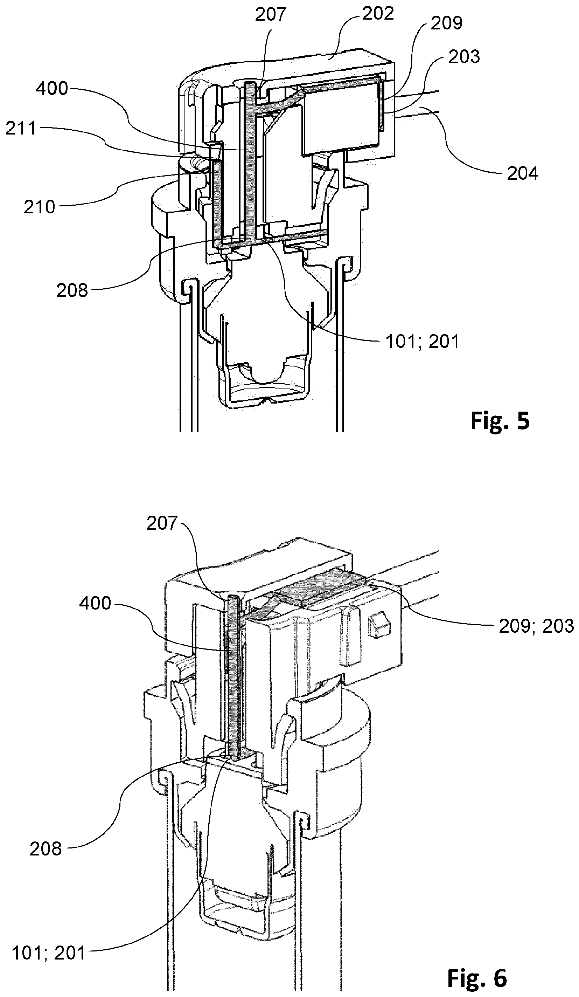

The resulting filled channel 206 is illustrated in Figs. 5 and 6 as a solid filling. As is best seen in these two figures, the channel 206 has a three-dimensional extension inside the housing 202 thereby forming a net-like configuration where each outlet opening is part of an individual branch. The sealing material 400 will thereby seal-off and thereby prevent intrusion of humidity and dust into the housing 202 and also into the interface between the housing 202 and the first terminal aggregate 101.

It is to be understood that the filling must not be made to such extent that the sealing material 400 exits one or more of the outlet openings 208, 209, 210. It is sufficient that the sealing material 400 reaches the vicinity of any of the respective openings 208, 209, 210 to thereby seal-off the channel 206 and relevant surface portions.

Further, since the second outlet opening 209 is the cable opening 203, the sealing material 400 will contribute to fixate the cable 204 to the housing 202. This contributes to the provision of a tamper-proof sealed connector arrangement 1 to the after-market.

The sealing material 400 may be injected into the inlet opening 207 by using a pressure in the range of 0-8 bar, more preferred 2-8 bar and even more preferred in the range of 3-6 bar. The pressure depends on parameters such as geometry and volume of the channel 206, any internal flow restrictions in the channel 206, type of sealing material 400, viscosity and any internal temperature differences in the parts making up the connector arrangement 1. It is advantageous if the pressure is sufficiently high to fill the channel 206 and also force any air that otherwise may be entrapped in the channel to leave the same.

The sealing material 400 may be a hot melt adhesive or a two-component adhesive. It is to be understood that also other types of adhesives or sealants are used in combination. By way of example, the channel system 206 is filled, or substantially filled with a first type of sealing material 400, e.g. a hot melt adhesive or a two-component adhesive, whereas the first outlet opening 208 is filled with a second type of sealing material 400. Any remaining space adjacent any of the one or more outlet openings 209, 210 may be filled with said second type of sealing material 400. Such supplementary filling is made from the exterior side of the housing 202. Also, such second type of sealing material 400 may be hardened by another method than the first type adhesive, such as UV heating.

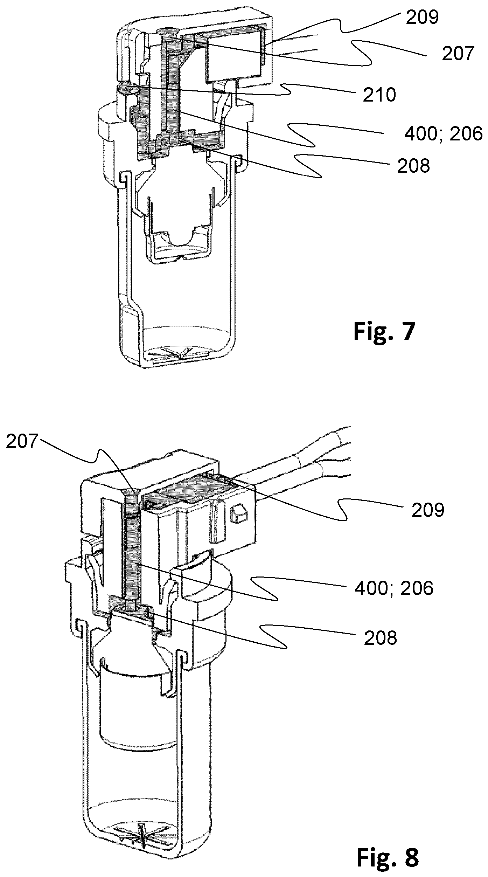

Depending on the amount of sealing material 400 that is injected, the sealing material 400 may be forced all the way from the inlet opening 207 of the channel system 206 to and out of the respective outlet opening 208, 209, 210 of the channel system 206, i.e. providing a complete filling as is disclosed in Figs. 7 and 8. Alternatively, the sealing material 400 may be forced all the way from the inlet opening 207 of the channel system 206 to a vicinity of the first outlet opening 208 but not out of the same as is disclosed in Figs. 5 and 6. This may be seen as a partial filling. No matter partial or complete filling, the filling should be made to such extent that the sealing material 400 seals-off the interface between the first and the second terminal aggregates 101, 201. Thus, both degrees of filling may be used on the manufacturer's choice to provide a sealed connector arrangement 1 that is sufficiently sealed to meet a given standard. One advantage of a complete filling over a partial filling is that the complete filling better facilitates a visual quality inspection to see any pores or the like that may indicate or allow a possible leakage.

The inlet opening 207 of the channel system 206 will be automatically sealed-off since the sealing material 400 is injected via the same. The degree of filling depends on parameters such viscosity and amount of sealing material 400 injected.

The method may further comprise the act of hardening 4000 the sealing material 400 after injecting the sealing material 400 into the inlet opening 207. The hardening may be made in room temperature. The hardening may also be made by subjecting the sealed connector arrangement 1 to an active heating, i.e. subjecting the sealed connector arrangement 1 to a temperature above room temperature during a certain time period. The choice of hardening method, temperature and time depends on parameters such as the type of sealing material 400 that is used, the volume of sealing material 400 and allowed cycle time in the production system.

Accordingly, a method of producing a sealed connector arrangement 1 is provided wherein the sealing is provided by injecting a sealing material 400 into an internal channel system 206 of the housing 202. The injection of sealing material 400 is made in a condition when the connector 200 is connected to the first terminal aggregate 101 thereby forming the electrical and/or optical contact between the first and the second terminal aggregates 101, 201. Accordingly, the channel system 206 to be filled with a sealing material 400 is defined partly by the connector 200 and its housing 202 and partly by the first terminal aggregate 101 and hence also by the interface between the first terminal aggregate 101 and the second terminal aggregate 201. Thereby, the connector 200 with its housing 202 which supports the second terminal aggregate 201 and which in turn is connected to the first terminal aggregate 101 will, after filling, form one sealed aggregate in which the area surrounding the interface between the interconnected first and second terminal aggregates 101, 201 is sealed-off and hence protected from intrusion of humidity and dust. Since the first and second terminal aggregates 101, 201 are interconnected before the sealing material 400 is injected, the sealing-off does not impact the communication between the two terminal aggregates 101, 201 but does instead protect the same from coming in contact with any dust/humidity. Further, the sealing material 400 prevents dis-connection of the two terminal aggregates 101, 201.

Not only does the method provide a sealed connector arrangement 1 that may meet a set standard, but it also provides a tamper-proof unit that facilitates the process when installing a component using such sealed connector arrangement 100 in its intended position, such as in a road vehicle or in a wearable electronic device, but it is also facilitates the after-market in the event a component using such sealed connector arrangement 1 is provided as a spare part. Such spare part will by default be provided in a sealed condition without any separate needs to add additional sealings or gaskets.

The present method has been shown to allow manufacturing of sealed connector arrangements that meet the requirements set out in the standard IP69K which is a standard which involves a resistance to very harsh conditions in terms of humidity and dust intrusion and which standard is applied for certain components in road type vehicles.

It is realized by a person skilled in the art that features from various embodiments disclosed herein may be combined with one another to provide further alternative embodiments.

The connector arrangement 100 and the method of producing the same has been described in the context of the terminal aggregates being of the plug-and-socket type for electrical power transmission. The principle is equally applicable to other types of terminal aggregates and for other types of transmission, such as optical signal transmission. The connector arrangement 1 may even allow parallel transmissions, such as one set of terminal aggerates arranged for electrical power transmission and one set of terminal aggregates arranged for optical signal transmission. Such parallel terminal aggregates may be contained in one and the same branch of the channel system and hence be arranged in the vicinity of one and the same outlet opening. It is also understood that the parallel terminal aggregates may be contained in different branches of the channel system and hence be arranged in the vicinity of different outlet openings.

The connector arrangement has been descried as comprising a housing with one single channel system, said channel system comprising one inlet opening and three outlet openings. The skilled person realises that the design of the housing with its channel system, the spatial extension of the channel system inside the housing and the number of outlets may vary within the scope of the invention. Non-limiting examples of decisive factors are the type of terminal aggregates, the overall design of the housing, the type of electrical device and the position of the cable opening. Accordingly, the disclosed embodiment is only one non-limiting example.

Also, the skilled person realizes that a plurality of discrete channels may be used, where each channel comprises one inlet opening and one or more outlet openings.

## Claims

1. A method of producing a sealed connector arrangement, by means of a first terminal aggregate (101) and a connector (200),
the first terminal aggregate (101) being adapted to form part of an electronic unit; and
the connector (200) comprising:
a housing (202) supporting a second terminal aggregate (201) adapted to form an electrical and/or optical contact with the first terminal aggregate (101);
a cable (204) connected to the second terminal aggregate (201) and extending out of the housing (202) through a cable opening (203); and
a channel system (206) comprising an inlet opening (207) and a first outlet opening (208), said first outlet opening (208) being arranged adjacent the second terminal aggregate (201);
the method comprising:
connecting the connector (200) to the first terminal aggregate (101) thereby forming the electrical and/or optical contact between the first and the second terminal aggregates (101, 201);
injecting a first sealing material (400) into the inlet opening (207) so that the first sealing material (400) is forced via the channel system (206) to a vicinity of the first outlet opening (208), thereby sealing off an interface between the first and the second terminal aggregates (101, 201); **characterized in** the step of
supplementary filling the first outlet opening with a second sealing material from an exterior side of the housing.

2. The method of claim 1, wherein the channel system (206) further comprises a second outlet opening (209) being arranged adjacent the cable opening (203), wherein the act of injecting the first sealing material (400) into the inlet opening (207) further comprises forcing the first sealing material (400) via the channel system (206) to a vicinity of, or out of the second outlet opening (209), thereby sealing off an interface between the cable (204) and the cable opening (203) of the housing (202).

3. The method of claim 2, wherein the channel system (206) further comprises a third outlet opening (210) being arranged adjacent a free surface of the housing (202) configured to face the first terminal aggregate (101) in a condition when the connector (200) is connected to the first terminal aggregate (101), wherein the act of injecting the first sealing material (400) into the inlet opening (207) further comprises forcing the first sealing material (400) via the channel system (206) to a vicinity of, or out of the third outlet opening (210), thereby sealing off an interface between the free surface of the housing (202) and the first terminal aggregate (101).

4. The method according to any of claims 2-3, further comprising, in the event the first sealing material (400) is forced to a vicinity of the second and/or third outlet opening, supplementary filling the second outlet opening and/or the third outlet opening with a second sealing material from an exterior side of the housing.

5. The method according to any of the preceding claims, wherein the first sealing material (400) is injected into the inlet opening (207) by using a pressure in the range of 0-8 bar, more preferred in the range of 2-8 bar and even more preferred in the range of 3-6 bar.

6. The method according to any of the preceding claims, further comprising the act of hardening the first sealing material (400) after injecting the sealing material (400) into the inlet opening (207).

7. The method according to any of claims 1-6, wherein the first sealing material (400) is a hot melt adhesive or a two-component adhesive.

8. The method according to any of claims 1-7, further comprising the step of hardening the second sealing material by UV heating.

9. The method according to any of claims 1-8, wherein the channel system (206) further comprises at least one vent hole (214), whereby air in the channel system (206) is allowed to leave the channel system (206) during the act of injecting the first sealing material (400).

10. A sealed connector arrangement comprising a connector (200) and a first terminal aggregate (101) adapted to form part of an electronic unit, the connector (200) comprising:
a housing (202) supporting a second terminal aggregate (201) adapted to form an electrical and/or optical contact with the first terminal aggregate (101);
a cable (204) connected to the second terminal aggregate (201) and extending out of the housing (202) through a cable opening (203); and
a channel system (206) comprising an inlet opening (207) and a first outlet opening (208), said first outlet opening (208) being arranged adjacent the second terminal aggregate (201);
wherein
the connector (200) is connected to the first terminal aggregate (101) to form the electrical and/or optical contact between the first and the second terminal aggregates (101, 201); and
a first sealing material (400) that has been injected into the inlet opening (207) so that the first sealing material (400) is forced via the channel system (206) to a vicinity of the first outlet opening (208), thereby sealing off an interface between the first and the second terminal aggregates (101, 201);
**characterised in**
a second sealing material that fills the first outlet opening from an exterior side of the housing.

11. The sealed connector arrangement according to claim 10, wherein the first terminal aggregate (101) is an electric device or a member of an electric device.

12. The sealed connector arrangement according to claim 11, wherein the electrical device is configured to form part of a road vehicle or a wearable electronic device.

13. The sealed connector arrangement according to claim 11, wherein the first terminal arrangement (101) is part of a micro gas generator.

14. The sealed connector arrangement according to any of claims 10-13, wherein the first and second terminal aggregates (101, 201) comprise power connecting members or optical connecting members.

15. Use of the method according to any of claims 1-9 to produce a sealed connector arrangement (100) according to any of claims 10-14 in a road vehicle or in a wearable electronic device.

## Patentansprüche

1. Verfahren zum Herstellen einer abgedichteten Steckverbinderanordnung mittels eines ersten Anschlussaggregats (101) und eines Steckverbinders (200),
wobei das erste Anschlussaggregat (101) angepasst ist, um einen Teil einer elektronischen Einheit zu bilden; und
der Steckverbinder (200) umfassend:
ein Gehäuse (202), das ein zweites Anschlussaggregat (201) trägt, das angepasst ist, um einen elektrischen und/oder optischen Kontakt mit dem ersten Anschlussaggregat (101) zu bilden;
ein Kabel (204), das mit dem zweiten Anschlussaggregat (201) verbunden ist und sich durch eine Kabelöffnung (203) aus dem Gehäuse (202) erstreckt; und
ein Kanalsystem (206), umfassend eine Einlassöffnung (207) und eine erste Auslassöffnung (208), wobei die erste Auslassöffnung (208) angrenzend an dem zweiten Anschlussaggregat (201) angeordnet ist; das Verfahren umfassend:
Verbinden des Steckverbinders (200) mit dem ersten Anschlussaggregat (101), wodurch der elektrische und/oder optische Kontakt zwischen dem ersten und dem zweiten Anschlussaggregat (101, 201) gebildet wird;
Einspritzen eines ersten Dichtungsmaterials (400) in die Einlassöffnung (207), sodass das erste Dichtungsmaterial (400) über das Kanalsystem (206) in eine Nähe der ersten Auslassöffnung (208) gedrückt wird, wodurch eine Schnittstelle zwischen dem ersten und dem zweiten Anschlussaggregat (101, 201) abgedichtet wird; **gekennzeichnet durch** den Schritt des zusätzlichen Füllens der ersten Auslassöffnung mit einem zweiten Dichtungsmaterial von einer Außenseite des Gehäuses aus.

2. Verfahren nach Anspruch 1, wobei das Kanalsystem (206) ferner eine zweite Auslassöffnung (209) umfasst, die angrenzend an die Kabelöffnung (203) angeordnet ist, wobei der Vorgang des Einspritzens des ersten Dichtungsmaterials (400) in die Einlassöffnung (207) ferner das Drücken des ersten Dichtungsmaterials (400) über das Kanalsystem (206) in eine Nähe der zweiten Auslassöffnung (209) oder aus dieser heraus umfasst, wodurch eine Schnittstelle zwischen dem Kabel (204) und der Kabelöffnung (203) des Gehäuses (202) abgedichtet wird.

3. Verfahren nach Anspruch 2, wobei das Kanalsystem (206) ferner eine dritte Auslassöffnung (210) umfasst, die angrenzend an einer freien Oberfläche des Gehäuses (202) angeordnet ist, die konfiguriert ist, um dem ersten Anschlussaggregat (101) in einem Zustand zugewandt zu sein, in dem der Steckverbinder (200) mit dem ersten Anschlussaggregat (101) verbunden ist, wobei der Vorgang des Einspritzens des ersten Dichtungsmaterials (400) in die Einlassöffnung (207) ferner das Drücken des ersten Dichtungsmaterials (400) über das Kanalsystem (206) in eine Nähe der dritten Auslassöffnung (210) oder aus dieser heraus umfasst, wodurch eine Schnittstelle zwischen der freien Oberfläche des Gehäuses (202) und des ersten Anschlussaggregats (101) abgedichtet wird.

4. Verfahren nach einem der Ansprüche 2 bis 3, ferner umfassend für den Fall, dass das erste Dichtungsmaterial (400) in eine Nähe der zweiten und/oder dritten Auslassöffnung gedrückt wird, das zusätzliche Füllen der zweiten Auslassöffnung und/oder der dritten Auslassöffnung mit einem zweiten Dichtungsmaterial von einer Außenseite des Gehäuses aus.

5. Verfahren nach einem der vorstehenden Ansprüche, wobei das erste Dichtungsmaterial (400) durch Verwenden eines Drucks in dem Bereich von 0-8 bar, mehr bevorzugt in dem Bereich von 2-8 bar und noch mehr bevorzugt in dem Bereich von 3-6 bar in die Einlassöffnung (207) eingespritzt wird.

6. Verfahren nach einem der vorstehenden Ansprüche, ferner umfassend den Vorgang eines Aushärtens des ersten Dichtungsmaterials (400) nach dem Einspritzen des Dichtungsmaterials (400) in die Einlassöffnung (207).

7. Verfahren nach einem der Ansprüche 1 bis 6, wobei das erste Dichtungsmaterial (400) ein Schmelzklebstoff oder ein Zweikomponentenklebstoff ist.

8. Verfahren nach einem der Ansprüche 1 bis 7, ferner umfassend den Schritt des Aushärtens des zweiten Dichtungsmaterials durch UV-Erhitzung.

9. Verfahren nach einem der Ansprüche 1 bis 8, wobei das Kanalsystem (206) ferner mindestens ein Entlüftungsloch (214) umfasst, wodurch es der Luft in dem Kanalsystem (206) ermöglicht wird, das Kanalsystem (206) während des Vorgangs der Einspritzens des ersten Dichtungsmaterials (400) zu verlassen.

10. Abgedichtete Steckverbinderanordnung, umfassend einen Steckverbinder (200) und ein erstes Anschlussaggregat (101), die angepasst sind, um einen Teil einer elektronischen Einheit zu bilden, der Steckverbinder (200) umfassend:
ein Gehäuse (202), das ein zweites Anschlussaggregat (201) trägt, das angepasst ist, um einen elektrischen und/oder optischen Kontakt mit dem ersten Anschlussaggregat (101) zu bilden;
ein Kabel (204), das mit dem zweiten Anschlussaggregat (201) verbunden ist und sich durch eine Kabelöffnung (203) aus dem Gehäuse (202) erstreckt; und
ein Kanalsystem (206), umfassend eine Einlassöffnung (207) und eine erste Auslassöffnung (208), wobei die erste Auslassöffnung (208) angrenzend an dem zweiten Anschlussaggregat (201) angeordnet ist; wobei
der Steckverbinder (200) mit dem ersten Anschlussaggregat (101) verbunden ist, um den elektrischen und/oder optischen Kontakt zwischen dem ersten und dem zweiten Anschlussaggregat (101, 201) zu bilden; und
ein erstes Dichtungsmaterial (400), das in die Einlassöffnung (207) eingespritzt wurde, sodass das erste Dichtungsmaterial (400) über das Kanalsystem (206) in eine Nähe der ersten Auslassöffnung (208) gedrückt wird, wodurch eine Schnittstelle zwischen dem ersten und dem zweiten Anschlussaggregat (101, 201) abgedichtet wird; **gekennzeichnet durch**
ein zweites Dichtungsmaterial, das die erste Auslassöffnung von einer Außenseite des Gehäuses aus füllt.

11. Abgedichtete Steckverbinderanordnung nach Anspruch 10, wobei das erste Anschlussaggregat (101) eine elektrische Vorrichtung oder ein Bauteil einer elektrischen Vorrichtung ist.

12. Abgedichtete Steckverbinderanordnung nach Anspruch 11, wobei die elektrische Vorrichtung konfiguriert ist, um Teil eines Straßenfahrzeugs oder einer tragbaren elektronischen Vorrichtung zu bilden.

13. Abgedichtete Steckverbinderanordnung nach Anspruch 11, wobei das erste Anschlussaggregat (101) Teil eines Mikrogasgenerators ist.

14. Abgedichtete Steckverbinderanordnung nach einem der Ansprüche 10 bis 13, wobei das erste und das zweite Anschlussaggregat (101, 201) Stromverbindungsbauteile oder optische Verbindungsbauteile umfassen.

15. Verwendung des Verfahrens nach einem der Ansprüche 1 bis 9, um eine abgedichtete Steckverbinderanordnung (100) nach einem der Ansprüche 10 bis 14 in einem Straßenfahrzeug oder in einer tragbaren elektronischen Vorrichtung herzustellen.

## Revendications

1. Procédé de production d'un agencement de connecteur étanche, au moyen d'un premier agrégat terminal (101) et d'un connecteur (200),
le premier agrégat terminal (101) est adapté pour former une partie d'une unité électronique ; et
le connecteur (200) comprenant :
un logement (202) supportant un second agrégat terminal (201) adapté pour former un contact électrique et/ou optique avec le premier agrégat terminal (101) ;
un câble (204) connecté au second agrégat terminal (201) et s'étendant hors du logement (202) à travers une ouverture de câble (203) ; et
un système de canaux (206) comprenant une ouverture d'entrée (207) et une première ouverture de sortie (208), ladite première ouverture de sortie (208) étant agencée adjacente au second agrégat terminal (201) ;
le procédé comprenant :
la connexion du connecteur (200) au premier agrégat terminal (101), formant de ce fait le contact électrique et/ou optique entre le premier et le second agrégats terminaux (101, 201) ;
l'injection d'un premier matériau d'étanchéité (400) dans l'ouverture d'entrée (207) de sorte que le premier matériau d'étanchéité (400) est forcé par l'intermédiaire du système de canaux (206) à une proximité de la première ouverture de sortie (208), rendant de ce fait étanche une interface entre le premier et le second agrégats terminaux (101, 201) ; **caractérisé par l'**étape de remplissage supplémentaire de la première ouverture de sortie avec un second matériau d'étanchéité à partir d'un côté extérieur du logement.

2. Procédé selon la revendication 1, dans lequel le système de canaux (206) comprend en outre une deuxième ouverture de sortie (209) étant agencée adjacente à l'ouverture de câble (203), dans lequel l'injection du premier matériau d'étanchéité (400) dans l'ouverture d'entrée (207) comprend en outre le fait de forcer le premier matériau d'étanchéité (400) par l'intermédiaire du système de canaux (206) à une proximité ou hors de la deuxième ouverture de sortie (209), rendant de ce fait étanche une interface entre le câble (204) et l'ouverture de câble (203) du logement (202).

3. Procédé selon la revendication 2, dans lequel le système de canaux (206) comprend en outre une troisième ouverture de sortie (210) étant agencée adjacente à une surface libre du logement (202) conçue pour faire face au premier agrégat terminal (101) dans un état où le connecteur (200) est connecté au premier agrégat terminal (101), dans lequel l'acte d'injection du premier matériau d'étanchéité (400) dans l'ouverture d'entrée (207) comprend en outre le fait de forcer le premier matériau d'étanchéité (400) par l'intermédiaire du système de canaux (206) à une proximité ou hors de la troisième ouverture de sortie (210), rendant de ce fait étanche une interface entre la surface libre du logement (202) et le premier agrégat terminal (101).

4. Procédé selon l'une quelconque des revendications 2 à 3, comprenant en outre, dans le cas où le premier matériau d'étanchéité (400) est forcé à une proximité de la deuxième et/ou de la troisième ouverture de sortie, le remplissage supplémentaire de la deuxième ouverture de sortie et/ou de la troisième ouverture de sortie avec un second matériau d'étanchéité à partir d'un côté extérieur du logement.

5. Procédé selon l'une quelconque des revendications précédentes, dans lequel le premier matériau d'étanchéité (400) est injecté dans l'ouverture d'entrée (207) à l'aide d'une pression dans la plage de 0 à 8 bars, de manière plus préférée dans la plage de 2 à 8 bars, et de manière encore plus préférée dans la plage de 3 à 6 bars.

6. Procédé selon l'une quelconque des revendications précédentes, comprenant en outre l'acte de durcissement du premier matériau d'étanchéité (400) après l'injection du matériau d'étanchéité (400) dans l'ouverture d'entrée (207).

7. Procédé selon l'une quelconque des revendications 1 à 6, dans lequel le premier matériau d'étanchéité (400) est un adhésif thermofusible ou un adhésif à deux composants.

8. Procédé selon l'une quelconque des revendications 1 à 7, comprenant en outre l'étape de durcissement du second matériau d'étanchéité par chauffage UV.

9. Procédé selon l'une quelconque des revendications 1 à 8, dans lequel le système de canaux (206) comprend en outre au moins un trou d'aération (214), moyennant quoi l'air dans le système de canaux (206) est autorisé à quitter le système de canaux (206) pendant l'acte d'injection du premier matériau d'étanchéité (400).

10. Arrangement de connecteur étanche comprenant un connecteur (200) et un premier agrégat terminal (101) adapté pour former une partie d'une unité électronique, le connecteur (200) comprenant :
un logement (202) supportant un second agrégat terminal (201) adapté pour former un contact électrique et/ou optique avec le premier agrégat terminal (101) ;
un câble (204) connecté au second agrégat terminal (201) et s'étendant hors du logement (202) à travers une ouverture de câble (203) ; et
un système de canaux (206) comprenant une ouverture d'entrée (207) et une première ouverture de sortie (208), ladite première ouverture de sortie (208) étant agencée adjacente au second agrégat terminal (201) ;
dans lequel
le connecteur (200) est connecté au premier agrégat terminal (101) pour former le contact électrique et/ou optique entre le premier et le second agrégats terminaux (101, 201) ; et
un premier matériau d'étanchéité (400) qui a été injecté dans l'ouverture d'entrée (207) de sorte que le premier matériau d'étanchéité (400) est forcé par l'intermédiaire du système de canaux (206) à une proximité de la première ouverture de sortie (208), rendant de ce fait étanche une interface entre le premier et le second agrégats terminaux (101, 201) ; **caractérisé en**
un second matériau d'étanchéité qui remplit la première ouverture de sortie à partir d'un côté extérieur du logement.

11. Agencement de connecteur étanche selon la revendication 10, dans lequel le premier agrégat terminal (101) est un dispositif électrique ou un organe d'un dispositif électrique.

12. Agencement de connecteur scellé selon la revendication 11, dans lequel le dispositif électrique est conçu pour former une partie d'un véhicule routier ou d'un dispositif électronique portable.

13. Agencement de connecteur étanche selon la revendication 11, dans lequel le premier agencement terminal (101) est une partie d'un micro-générateur de gaz.

14. Agencement de connecteur étanche selon l'une quelconque des revendications 10 à 13, dans lequel les premier et second agrégats terminaux (101, 201) comprennent des éléments de connexion de puissance ou des éléments de connexion optique.

15. Utilisation du procédé selon l'une quelconque des revendications 1 à 9 pour produire un arrangement de connecteur étanche (100) selon l'une quelconque des revendications 10 à 14 dans un véhicule routier ou dans un dispositif électronique portable.
